# EUROPÄISCHE PATENTSCHRIFT

(11) **EP 3 458 197 B1**
(45) Veröffentlichungstag und Bekanntmachung des Hinweises auf die Patenterteilung: **10.01.2024**
(21) Anmeldenummer: 17723253.5
(22) Anmeldetag: 10.04.2017
(51) Int. Cl.: B04C 3/06, B04C 3/00, B04C 9/00

(54) **ABSAUGGERÄT MIT EINEM EINEN PROZESSRAUM UMSCHLIESSENDEN GEHÄUSE**
SUCTION DEVICE HAVING A HOUSING WHICH ENCLOSES A PROCESS CHAMBER
APPAREIL D'ASPIRATION COMPRENANT UN BOÎTIER ENTOURANT UNE CHAMBRE DE TRAITEMENT

(30) Priorität: 20.05.2016 DE 102016109380
(43) Veröffentlichungstag der Anmeldung: 27.03.2019
(73) Patentinhaber: ESTA Apparatebau GmbH & Co. KG, 89250 Senden (DE)
(72) Erfinder: SCHAUB, Frederik, 89290 Buch (DE); KRATER, Sebastian, 89195 Staig (DE)
(74) Vertreter: Michalski Hüttermann & Partner Patentanwälte mbB
(86) Internationale Anmeldenummer: PCT/DE2017/100285
(87) Internationale Veröffentlichungsnummer: WO 2017/198250

(56) Entgegenhaltungen:
- WO-A1-2015/033414
- JP-U- S5 161 565
- JP-U- S63 144 853
- US-A- 5 236 479

## Beschreibung

Die Erfindung betrifft ein Absauggerät, mit einem einen Prozessraum umschließenden Gehäuse mit wenigstens einem Volumenstrom-Einlass und wenigstens einem Volumenstrom-Auslass.

Absaug- und Filtergeräte dienen, je nach Anwendungsfall zur Absaugung und Filtration von Spänen, Fasern, groben Partikeln aller Art, Rauchbestandteilen, Funken, Flüssigkeiten und dergleichen. Gelangen diese Produkte in einem Absauggerät auf direktem Wege auf ein oder mehrere oftmals kleinporigen und aus sensiblen Materialien gefertigte Filterelemente, wird dieser stark belastet, was zu reduzierten Standzeiten, vorzeitigen Verschleiß oder gar zu Beschädigungen des Filterelements führen kann. Aus diesem Grund werden Geräte dieser Art oftmals mit zusätzlichen Vorabscheider und/oder Vorfiltern, beispielsweiser einer sogenannten Demistermatte, ausgestattet. Dies ist technisch aufwändig und kostenintensiv in der Wartung.

Aus der DE-OS 705 339 ist ein Fliehkraftstaubabscheider mit einem einen Prozessraum bekannt, bei dem ein Gehäuse den Volumenstrom leitet und hierzu schraubenförmige Windungen in dem zylindrischen Gehäuse vorhanden sind.

Aus der US 5,236,479 ist ein Zyklonabscheider bekannt, der einen Partikel belasteten Volumenstrom zykloidförmig nach unten in einen Prozessraum führt, wobei der Volumenstrom über ein zentrales Ablassrohr im mittleren Bereichs des Prozessraums wieder nach außen geführt wird.

Aufgabe der Erfindung ist es eine verbessertes Absauggerät zur Verfügung zu stellen, bei dem eine verbesserte Partikelvorabscheidung vor den Filterkörpern gewährleistet ist.

Diese Aufgabe wird durch ein Absauggerät nach den Merkmalen des Anspruchs 1 gelöst.

Erfindungsgemäß ist ein Absauggerät, mit einem einen Prozessraum umschließenden Gehäuse mit wenigstens einem Volumenstrom-Einlass und wenigstens einem Volumenstrom-Auslass, vorgeschlagen, dass sich dadurch auszeichnet, dass das Gehäuse den Volumenstrom leitet und hierzu eine wenigstens eine Windung aufweisende schraubenförmige Kontur aufweist, wobei der wenigstens eine Volumenstrom-Einlass am oberen Ende der schraubenförmigen Kontur so angeordnet ist, dass der Volumenstrom tangential eingeleitet wird und entlang der schraubenförmigen Kontur im Prozessraum nach unten geführt wird, wobei die die schraubenförmige Kontur bildenden Wandungen des Gehäuses im Prozessraum an einem darin eingesetzten zylinderförmigen Filterkörper anliegen, wobei der Volumenstrom-Auslass auf der Schraubenachse der schraubenförmigen Kontur angeordnet ist, wobei der zylinderförmige Filterkörper vor dem Volumenstrom-Auslass am unteren Ende des Gehäuses auf der Schraubenachse der schraubenförmigen Kontur angeordnet ist.

Im Sinne der Erfindung ist das Gehäuse bzw. die schraubenförmige Kontur mit einem Winkel von 0° bis 60° der Schraubenachse gegen die Vertikale ausgerichtet.

Durch die innere Form des Gehäuses wird demnach eine Luft- und Partikelströmung dahingehend erzeugt, dass möglichst viele Partikel durch die Zwangsführung vorabgeschieden werden und die Filterelemente somit möglichst umfassend vor den genannten Produkten geschützt wird. Zudem wird die Druckstabilität des Gehäuses durch dessen geschwungene Form erhöht.

Das Gehäuse besitzt eine spiralförmige Innenkontur, in deren Mittelachse bzw. in deren Nähe sich ein Filterelement befindet. Der Partikelstrom gelangt von der Ansaugöffnung im oberen Bereich entlang der spiralförmigen Ausprägung des Gehäuses in den unteren Bereich. Durch den wenigstens radial/tangentialen Eintritt des Rohgasstroms in das Gehäuse und die aufgezwungene spiralförmige Bewegung werden schwerere Partikel durch Fliehkräfte nach außen gegen die Gehäusewand gedrückt und dort verlangsamt und gelangen durch die Spiral- bzw. Schrauben-Gehäuseform nach unten. Dort werden größere Partikel sicher abgeschieden, ohne den/die Filterkörper zuzusetzen.

Mit der Verwendung des vorgeschlagenen Gehäusekonzeptes sind keine separaten oder integrierten Vorabscheidebleche, Funkenschutzeinrichtungen und dergleichen, wie es bisher notwendig war, mehr erforderlich.

Das Gehäusekonzept vereint die Abscheidung von Partikeln durch Zentrifugalkräfte und durch ein filterndes Medium auf kleinstem Raum.

Da das eigentliche Filterelement entlastet wird, erhöht sich die Filterstandzeit signifikant.

Eine Variante der Erfindung sieht vor, dass mehrere Volumenstrom-Einlässe am oberen Ende der vertikal angeordneten schraubenförmigen Kontur angeordnet sind.

Eine besonders bevorzugte Weiterbildung der Erfindung sieht vor, dass ein Filterkörper vor dem Volumenstrom-Auslass im Innern des Prozessraums angeordnet ist, durch den der Volumenstrom geführt wird.

Ein weiterer dadurch hervorgerufener Vorteil liegt darin, dass sich durch die funktionale Verrippung (Schraubenform) und durch die Einbeziehung der Patrone (Filterkörper) als statisch wirksames Element bei vergleichbarem Unterdruckniveau Materialeinsparung erzielen lassen und/oder die Unterdruckstabilität stark erhöht ist gegenüber anderen Formen.

Durch die spezielle Ausformung und das Anliegen an dem Filterkörper wird eine statische Funktion übernommen. Das Gehäuse ist damit sehr viel druckstabiler als dies ohne die Abstützung der Fall wäre. Dadurch lassen sich bspw. höhere Unterdrücke realisieren oder Materialeinsparungen beim Gehäuse erzielen, da das Gehäuse auch mit reduzierten Wandstärken ohne Funktionseinbußen betrieben werden. Auch durch die funktionale Verrippung selbst in Form von Einschnüren wird die Unterdruckfestigkeit signifikant erhöht.

Bevorzugterweise ist im unteren Bereich des Prozessraums eine verschließbare Öffnung zur Entleerung des Prozessraums angeordnet. Hierdurch lassen sich angesammelte Materialien leicht aus dem Prozessraum entfernen.

Eine besonders vorteilhafte Ausgestaltung der Erfindung sieht vor, dass das Gehäuse einstückig oder aus zwei einstückigen Teilelementen ausgebildet ist. Dies ermöglicht eine kostengünstige und einfach zu handhabende Herstellung beispielsweise in Form von Halbschalen.

Von Vorteil ist im unteren Bereich des Gehäuses ein Flansch angeformt, welcher mit einem an einer Haltevorrichtung für das Gehäuse ausgebildeten Lager dergestalt zusammenwirken kann, dass das Gehäuse gekippt werden kann.

Bevorzugterweise ist nach dem Volumenstrom-Auslass am unteren Ende des Gehäuses ein den Volumenstrom erzeugendes Gebläse angeordnet.

Die Nutzungsdauer und Standzeit ist vorteilhafterweise erhöht, wenn wie nach einer Variante der Erfindung vorgeschlagen, im unteren Bereich des Gehäuses eine Schmutz-Sammel-Ausformung des Prozessraums für aus dem Volumenstrom abgeschiedene feste und flüssige Stoffe ausgebildet ist.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Schrägansicht eines erfindungsgemäßen Absauggeräts,
- Fig. 2: eine Ansicht von oben auf das Absauggerät aus Fig. 1,
- Fig. 3: eine Ansicht von vorne auf das Absauggerät aus Fig. 1,
- Fig. 4: eine Ansicht von der Seite her gesehen auf das Absauggerät aus Fig. 1,
- Fig. 5: eine Ansicht von hinten auf das Absauggerät aus Fig. 1,
- Fig. 6: eine schematische Schnitt-Darstellung des Absauggeräts aus Fig. 2 in Blickrichtung A,
- Fig. 7: eine schematische Darstellung der Volumenstromführung von oben her auf das Absauggerät gesehen,
- Fig. 8: eine schematische Darstellung der Volumenstromführung von der Seite her gesehen, und
- Fig. 9: eine Variante eines Absauggeräts mit mehreren Volumenstrom-Einlässen und mehreren Windungen der schraubenförmigen Kontur.

Die in den Figuren gleichen Bezugsziffern bezeichnen gleiche oder gleich wirkende Elemente.

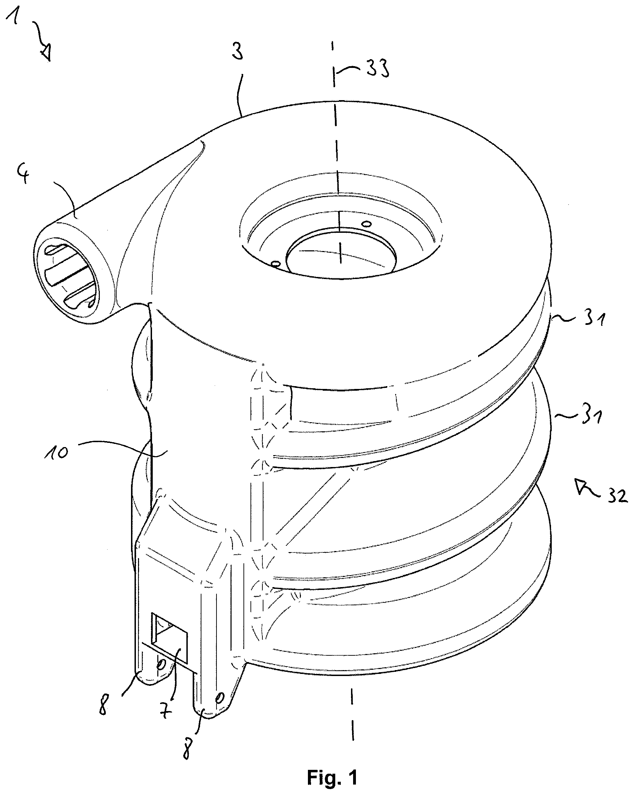

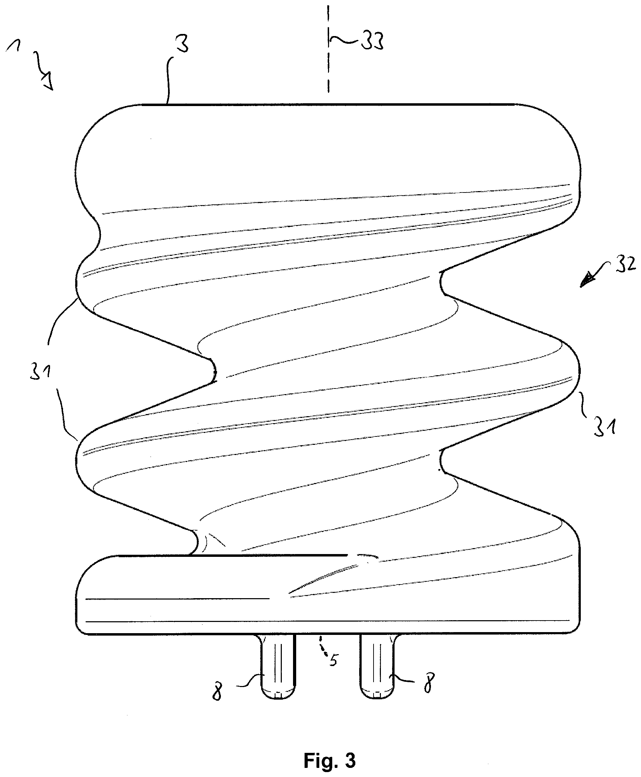

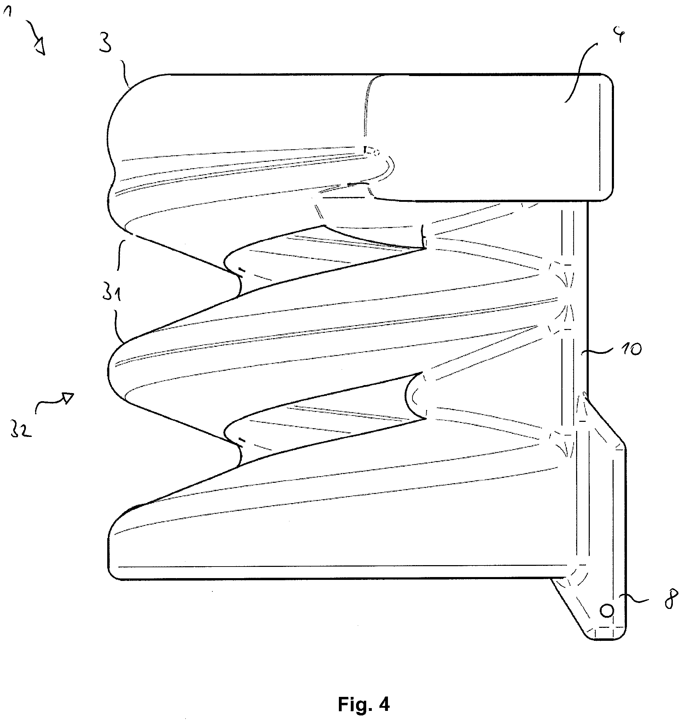

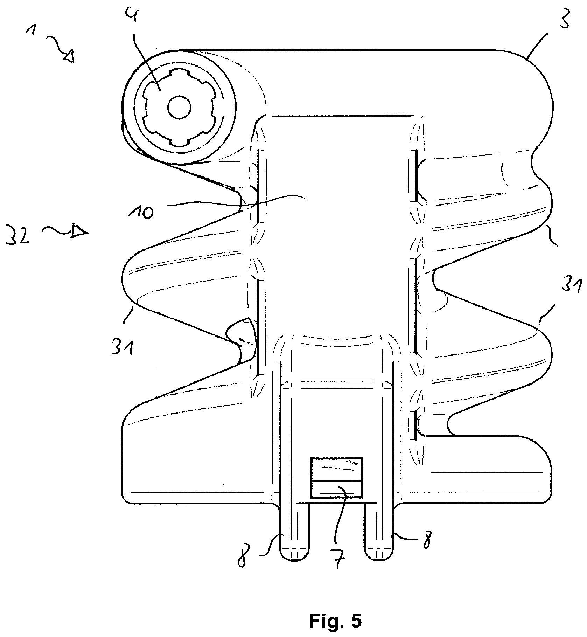

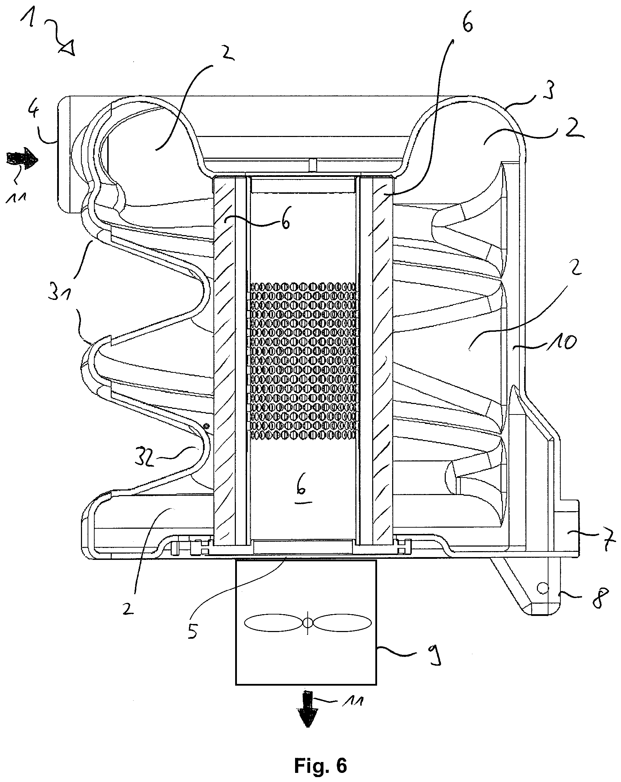

In den Fig. 1 bis 5 sin verschiedene Ansichten eines erfindungsgemäßen Absauggeräts 1, mit einem einen Prozessraum 2 umschließenden Gehäuse 3 mit einem Volumenstrom-Einlass 4 und einem Volumenstrom-Auslass 5 (siehe Fig. 3 oder Fig. 6), gezeigt. Dabei leitet das Gehäuse 3 den Volumenstrom 11 (siehe Fig. 6 bis 8) und weist hierzu eine mehrere Windungen 31 aufweisende schraubenförmige Kontur 32 auf.

Der Volumenstrom-Einlass 4 am oberen Ende der schraubenförmigen Kontur 32 ist so angeordnet, dass der Volumenstrom tangential eingeleitet wird und entlang der schraubenförmigen Kontur 32 im Prozessraum 2 nach unten geführt wird, wobei die die schraubenförmige Kontur 32 bildenden Wandungen 31 des Gehäuses 3 im Prozessraum 2 an einem darin eingesetzten zylinderförmigen Filterkörper 6 anliegen, wobei der Volumenstrom-Auslass 5 (siehe Fig. 3 oder Fig. 6) auf der Schraubenachse 33 der schraubenförmigen Kontur 32 angeordnet ist. Der Volumenstrom-Auslass 5 ist am unteren Ende des Gehäuses 3 auf der Schraubenachse 33 der schraubenförmigen Kontur 32 angeordnet.

Um eine Entleerung des mit gesammelten Partikeln oder Flüssigkeit gefüllten Prozessraums zu erleichtern ist im unteren Bereich des Prozessraums 2 eine verschließbare Öffnung 7 zur Entleerung des Prozessraums 2 angeordnet.

Um das Sammeln für aus dem Volumenstrom 11 abgeschiedene feste und flüssige Stoffe zu erleichtern ist im unteren Bereich des Gehäuses eine Schmutz-Sammel-Ausformung 10 des Prozessraums 2 ausgebildet.

Zudem ist im unteren Bereich des Gehäuses 3 ein Flansch 8 angeformt, welcher mit einem an einer Haltevorrichtung für das Gehäuse 3 ausgebildeten Lager (nicht dargestellt) dergestalt zusammenwirken kann, dass das Gehäuse 3 über eine Lagerachse gekippt werden kann.

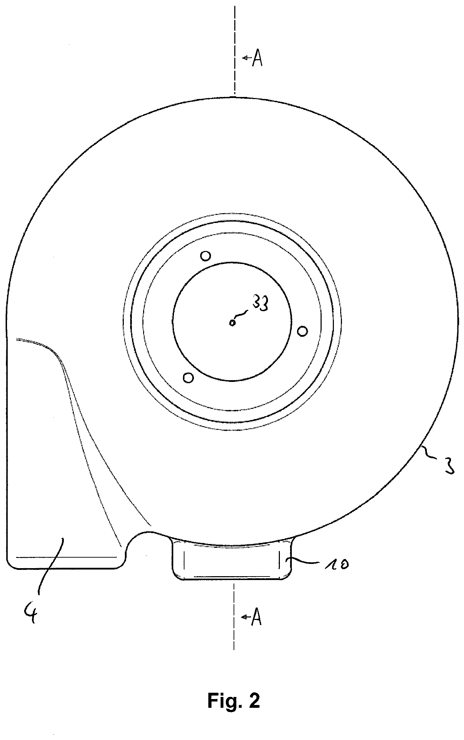

In Fig. 6 ist eine schematische Querschnittsdarstellung des Absauggeräts 1 aus Fig. 2 in Blickrichtung A gezeigt. Dabei wird ersichtlich, dass ein Filterkörper 6 vor dem Volumenstrom-Auslass 5 im Innern des Prozessraums 2 angeordnet ist, durch den der durch das Gebläse 9 erzeugte Volumenstrom 11 geführt wird.

In der Darstellung ist zudem gut zu sehen, dass die die schraubenförmige Kontur 32 bildenden Wandungen 31 des Gehäuses 3 im Prozessraum 2 an dem darin eingesetzten zylinderförmigen Filterkörper 6 anliegen und sich daran abstützen. Dies erhöht die Druckstabilität des Absauggeräts enorm.

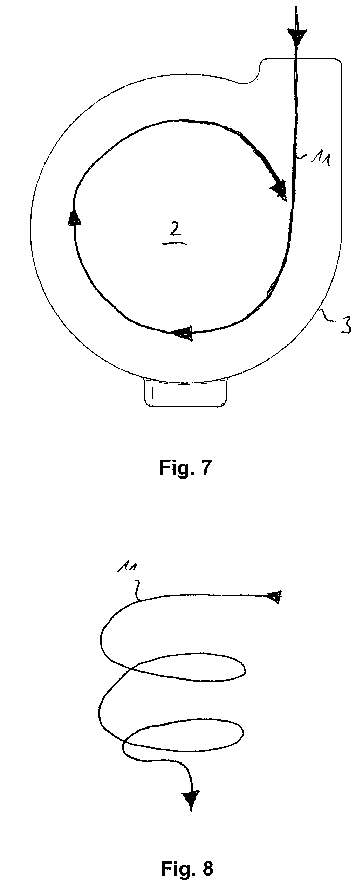

In den Fig. 7 und 8 ist eine schematische Darstellung der Volumenstromführung von oben und schematisch von der Seite her auf das Absauggerät gesehen gezeigt. Durch die Zentrifugalkräfte und damit bedingt durch die Ablagerung von Partikeln in und unter den schraubenförmigen Wandungen des Gehäuses und durch den filterndes Medium auf kleinstem Raum ist ein hocheffektives Absauggerät vorgeschlagen.

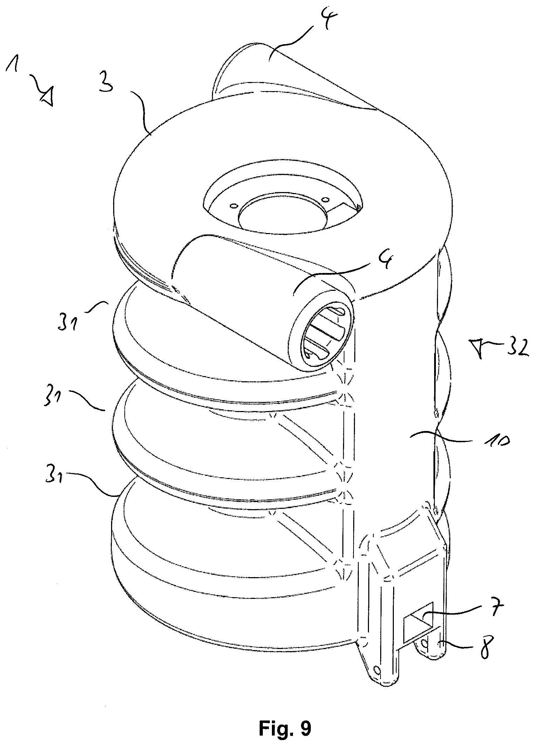

In Fig. 9 ist eine von mehreren denkbaren Varianten eines erfinderischen Absauggeräts 1 mit mehreren Volumenstrom-Einlässen 4 und mehreren Windungen 31 gezeigt.

### Bezugszeichenliste

- 1: Absauggerät
- 2: Prozessraum
- 3: Gehäuse
- 31: Windung
- 32: schraubenförmige Kontur
- 33: Schraubenachse
- 4: Volumenstrom-Einlass
- 5: Volumenstrom-Auslass
- 6: Filterkörper
- 7: Öffnung
- 8: Flansch
- 9: Gebläse
- 10: Schmutz-Sammel-Ausformung

## Patentansprüche

1. Absauggerät (1), mit einem einen Prozessraum (2) umschließenden Gehäuse (3) mit wenigstens einem Volumenstrom-Einlass (4) und wenigstens einem Volumenstrom-Auslass (5),
wobei das Gehäuse (3) den Volumenstrom leitet und hierzu eine wenigstens eine Windung (31) aufweisende schraubenförmige Kontur (32) aufweist,
wobei der wenigstens eine Volumenstrom-Einlass (4) am oberen Ende der schraubenförmigen Kontur (32) so angeordnet ist, wobei der Volumenstrom tangential eingeleitet wird und entlang der schraubenförmigen Kontur (32) im Prozessraum (2) nach unten geführt wird,
**dadurch gekennzeichnet,**
**dass** die die schraubenförmige Kontur (32) bildenden Wandungen (31) des Gehäuses (3) im Prozessraum (2) an einem darin eingesetzten zylinderförmigen Filterkörper (6) anliegen,
wobei der Volumenstrom-Auslass (5) auf der Schraubenachse (33) der schraubenförmigen Kontur (32) angeordnet ist,
wobei der zylinderförmige Filterkörper (6) vor dem Volumenstrom-Auslass (5) im Innern des Prozessraums (2) angeordnet ist, durch den der Volumenstrom geführt wird.

2. Absauggerät nach Anspruch 1,
**dadurch gekennzeichnet,**
**dass** der Volumenstrom-Auslass (5) am unteren Ende des Gehäuses (3) auf der Schraubenachse (33) der schraubenförmigen Kontur (32) angeordnet ist.

3. Absauggerät nach Anspruch 1 oder 2,
**dadurch gekennzeichnet,**
**dass** mehrere Volumenstrom-Einlässe (4) am oberen Ende der schraubenförmigen Kontur (32) angeordnet sind.

4. Absauggerät nach einem der Ansprüche 1 bis 3,
**dadurch gekennzeichnet,**
**dass** im unteren Bereich des Prozessraums (2) eine verschließbare Öffnung (7) zur Entleerung des Prozessraums angeordnet ist.

5. Absauggerät nach einem der Ansprüche 1 bis 4,
**dadurch gekennzeichnet,**
**dass** das Gehäuse (3) einstückig oder aus zwei einstückigen Teilelementen ausgebildet ist.

6. Absauggerät nach einem der Ansprüche 1 bis 5,
**dadurch gekennzeichnet,**
**dass** im unteren Bereich des Gehäuses (3) ein Flansch (8) angeformt ist, welcher mit einem an einer Haltevorrichtung für das Gehäuse (3) ausgebildeten Lager dergestalt zusammenwirken kann, dass das Gehäuse (3) gekippt werden kann.

7. Absauggerät nach einem der Ansprüche 1 bis 6,
**dadurch gekennzeichnet,**
**dass** nach dem Volumenstrom-Auslass (5) am unteren Ende des Gehäuses ein den Volumenstrom erzeugendes Gebläse (9) angeordnet ist.

8. Absauggerät nach einem der Ansprüche 1 bis 7,
**dadurch gekennzeichnet,**
**dass** im unteren Bereich des Gehäuses eine Schmutz-Sammel-Ausformung (10) des Prozessraums (2) für aus dem Volumenstrom abgeschiedene feste und flüssige Stoffe ausgebildet ist.

## Claims

1. Suction device (1), comprising a housing (3) enclosing a process chamber (2) and comprising at least one volumetric flow inlet (4) and at least one volumetric flow outlet (5),
wherein the housing (3) guides the volumetric flow and for this purpose has a helical contour (32) comprising at least one winding (31),
wherein the at least one volume flow inlet (4) is arranged at the upper end of the helical contour (32) in such a way that the volume flow is introduced tangentially and is guided downwards along the helical contour (32) in the process chamber (2),
**characterized in that**
the walls (31) of the housing (2) forming the helical contour (32) in the process chamber (2) rest against a cylindrical filter body (6) inserted therein, wherein the volumetric flow outlet (5) is disposed on the helical axis (33) of the helical contour (32), wherein the cylindrical filter body (6) is arranged upstream of the volumetric flow outlet (5) inside the process chamber (2) through which the volumetric flow is guided.

2. Suction device according to claim 1,
**characterized in that**
the volumetric flow outlet (5) is disposed at the lower end of the housing (3) on the helical axis (33) of the helical contour (32).

3. Suction device according to claim 1 or 2,
**characterized in that**
a plurality of volumetric flow inlets (4) are disposed at the upper end of the helical contour (32).

4. Suction device according to any one of claims 1 to 3,
**characterized in that**
a closable opening (7) for emptying the process chamber is disposed in the lower region of the process chamber (2).

5. Suction device according to any one of claims 1 to 4,
**characterized in that**
the housing (3) is formed in one piece or from two one-piece sub elements.

6. Suction device according to any one of claims 1 to 5,
**characterized in that**
a flange (8) is formed in the lower region of the housing (3), which flange is adapted to interact with a bearing formed at a holding device for the housing (3) in such a way that the housing (3) can be tilted.

7. Suction device according to any one of claims 1 to 6,
**characterized in that**
a fan (9) generating the volumetric flow is disposed downstream of the volumetric flow outlet (5) at the lower end of the housing.

8. Suction device according to any one of claims 1 to 7,
**characterized in that**
a dirt collecting formation (10) of the process chamber (2) for solid and liquid substances separated from the volumetric flow is formed in the lower region of the housing.

## Revendications

1. Appareil d'aspiration (1) pourvu d'un boitier (3) entourant une chambre de traitement (2) avec au moins une entrée de flux volumique (4) et au moins une sortie de flux volumique (5),
dans lequel le boitier (3) guide le flux volumique et présente à cet effet au moins un enroulement (31) présentant un profil (32) en forme d'hélice,
dans lequel l'au moins une entrée de flux volumique (4) est ainsi disposée sur l'extrémité supérieure du profil (32) en forme d'hélice,
dans lequel le flux volumique est introduit tangentiellement et est mené vers le bas le long du profil (32) en forme d'hélice dans la chambre de traitement (2),
**caractérisé en ce**
**que** les parois (31) du boitier (3) formant le profil (32) en forme d'hélice sont plaquées contre un corps de filtre (6) en forme de cylindre inséré à l'intérieur,
dans lequel la sortie de flux volumique (5) est disposée sur l'axe d'hélice (33) du profil (32) en forme d'hélice,
dans lequel le corps de filtre (6) en forme de cylindre est disposé devant la sortie de flux volumique (5) à l'intérieur de la chambre de traitement (2) à travers laquelle le flux volumique est guidé.

2. Appareil d'aspiration selon la revendication 1,
**caractérisé en ce**
**que** la sortie de flux volumique (5) est disposée à l'extrémité inférieure du boitier (3) sur l'axe de l'hélice (33) du profil (32) en forme d'hélice.

3. Appareil d'aspiration selon la revendication 1 ou la revendication 2,
**caractérisé en ce**
**que** plusieurs entrées de flux volumique (4) sont disposées sur l'extrémité supérieure du profil (32) en forme d'hélice.

4. Appareil d'aspiration selon l'une des revendications 1 à 3, **caractérisé en ce**
**qu'**un orifice (7) pouvant être obturé est disposé dans la zone inférieure de la chambre de traitement (2) pour la vidange de la chambre de traitement.

5. Appareil d'aspiration selon l'une des revendications 1 à 4, **caractérisé en ce**
**que** le boitier (3) est conçu d'une seule pièce ou en deux éléments partiels unitaires.

6. Appareil d'aspiration selon l'une des revendications 1 à 5, **caractérisé en ce**
**qu'**un embout (8) est formé dans la zone inférieure du boitier (3), lequel peut agir conjointement avec un logement formé sur un dispositif de maintien pour le boitier (3) de sorte que le boitier (3) puisse être basculé.

7. Appareil d'aspiration selon l'une des revendications 1 à 6, **caractérisé en ce**
**qu'**un ventilateur (9) générant le flux volumique est disposé à l'extrémité inférieure du boitier après la sortie de flux volumique (5) .

8. Appareil d'aspiration selon l'une des revendications 1 à 7, **caractérisé en ce**
**qu'**une structure collectrice de salissures (10) de la chambre de traitement (2) est formée à l'extrémité inférieure du boitier pour des substances solides déposées à partir du flux volumique et substances liquides.
